**Europäisches Patentamt**

**European Patent Office**

**Office européen des brevets**

(19)

(11) Numéro de publication: **0 035 296**
**A1**

## DEMANDE DE BREVET EUROPEEN

(12)

(21) Numéro de dépôt: **81200172.5**

(22) Date de dépôt: **13.02.81**

(51) Int. Cl.³: **A 01 G 7/00**

(30) Priorité: **18.02.80 IT 6724480**

(43) Date de publication de la demande: **09.09.81**
**Bulletin 81/36**

(84) Etats contractants désignés: **AT BE CH DE FR GB LI LU NL SE**

(71) Demandeur: **Pegasus Pension Fund S.A., Bank of America Building 50th Street, Panama City (PA)**

(72) Inventeur: **Giovannetti, Giusto, Corso Ferrucci, 95, I-10138 Turin (IT)**

(74) Mandataire: **Moinas, Michel, c/o Moinas & Cie Case Postale 88 5, rue Saint-Léger, CH-1211 Genève 4 (CH)**

(54) **Procédé de production de plantes mycorhizées par des champignons symbiotiques.**

(57) L'invention concerne un procédé de production de plantes mycorhizées par des champignons symbiotiques, lequel consiste à provoquer la mycorhize sur des plantes adultes, de façon à pouvoir disposer de plantes mycorhizées qui, une fois plantées, sont immédiatement en état de produire des fructifications. Le procédé consiste à cultiver une série de plants en terrain stérile, de préférence à partir de semences, et à mycorhizer ces plants qui poussent en milieu stérile en mettant en contact leurs racines avec les racines déjà mycorhizées par le champignon choisi, prélevées dans la nature sur d'autres plantes. Les plants pilotes ainsi obtenus sont plantés dans une serre stérile ou dans une pépinière stérile. Dans cette serre ou dans cette pépinière, on plante ensuite les plantes adultes destinées à être mycorhizées et qui ont été auparavant soumises à un procédé d'élimination des racines secondaires et de stérilisation des racines restantes. Les plants pilotes provoquent la mycorhize par le champignon choisi des plantes adultes qui sont ainsi en état de produire immédiatement des fructifications.

PROCEDE DE PRODUCTION DE PLANTES MYCORHIZEES
PAR DES CHAMPIGNONS SYMBIOTIQUES

La présente invention concerne un procédé de production de plantes mycorhizées par des champignons symbiotiques utilisables commercialement ou pour la sylviculture, comme par exemple le Tuber magnatum (truffe blanche), le Tuber macrosporum (truffe noire), le Tuber melanosporum (truffe noire du Périgord) , le Boletus edulis, le Boletus reticolatus, le Boletus aereus, le Boletus pinicola, l'Amanita Ceasarea, le Lattarius deliciosus.

Il a déjà été proposé de mycorhizer des plantes de type différent par des truffes comestibles, par exemple le Tuber melanosporum, à partir des semences des plantes destinées à être mycorhizées. La méthode a été décrite par Anna Fontana et Bruno Fassi dans la revue Allionia de l'année 1967 et comprend une phase de stérilisation des semences des plantes destinées à être mycorhizées, une phase de stérilisation du terrain devant recevoir les semences et une phase d'introduction des spores développées de la truffe choisie. Le tout est maintenu en phytocellule (un plant pour chaque phytocellule) dans une atmosphère semi-stérile pendant près de huit mois. Après cette période, les plants sont prêts à être plantés.

Cependant, dans le cas d'une utilisation de la méthode décrite ci-dessus, les délais pour la récolte des carpophores sont très longs. Dans le cas, par exemple du Tuber melanosporum, la récolte des carpophores peut être effectuée en moyenne après dix ans, et au minimum, dans des cas exceptionnels, (en utilisant des plants de noisetier), après quatre ans. En outre la méthode décrite ci-dessus n'est pas utilisable pour tous les champignons symbiotiques. Par exemple les spores du Boletus edulis ne germent pas lorsque l'on utilise la méthode susmentionnée. De plus, le coût nécessaire à la production des plants mycorhizés est de ce fait élevé.

Le but de la présente invention est de mettre au point un procédé de production de plantes mycorhizées par des champignons symbiotiques qui puisse provoquer la mycorhize sur une plante adulte, de façon à pouvoir disposer de plantes mycorhizées qui, une fois plantées, sont rapidement en état de produire des fructifications.

Pour atteindre ce but, l'invention a pour objet un procédé de production de plantes mycorhizées par des champignons symbiotiques, caractérisé par le fait qu'il comprend la chaîne d'opérations suivante :

a)    cultiver une série de plants en terrain stérile,

b)    mycorhizer les plants qui ont poussé en état stérile, en mettant en contact les racines de ces plants avec des racines déjà mycorhizées par le champignon choisi, prélevées dans la nature sur une autre plante,

c)    planter les plants pilotes ainsi obtenus dans un terrain stérile,

d)    couper les racines secondaires, mycorhizées par d'autres champignons que celui choisi, sur les plantes adultes que l'on veut mycorhizer, et stériliser les racines qui restent,

e)    planter en terrain stérile à côté des plantes pilotes lesdites plantes adultes pour provoquer leur mycorhize.

Grâce aux caractéristiques mentionnées, le procédé selon l'invention permet d'obtenir des plantes adultes mycorhizées qui sont en état de produire immédiatement des fructifications. En outre, le coût nécessaire à la production d'une quelconque plante mycorhizée est notablement réduit grâce aux méthodes de cette technique. Enfin, le procédé selon l'invention permet la mycorhize des plantes par n'importe quelle espèce de champignon symbiotique (par exemple également le Boletus edulis).

./..

La description qui suit concerne une forme préférentielle d'application du procédé selon la présente invention.

Le procédé comprend une première série d'opérations destinées à la préparation des plants pilotes qui sont ensuite utilisés pour provoquer la mycorhize sur les plantes adultes.

D'abord on fait germer en milieu stérile les graines des plantes concernées. Quand la plante a atteint un développement radiculaire suffisant, on met en contact ses racines, de préférence grâce à une ligature, avec les racines mycorhizées par le champignon symbiotique choisi. Ces racines ont été prélevées dans la nature sur une autre plante, en les recueillant sous les fructifications du champignon choisi et en les distinguant ensuite au microscope.

Les plants pilotes ainsi obtenus sont plantés dans un terrain stérile qui peut être obtenu soit d'une serre stérile ou d'une pépinière stérile.

Dans le cas où l'on veut utiliser une serre, il convient de préparer un récipient en ciment de forme rectangulaire dont le fond est incliné légèrement (par exemple avec une inclinaison de 10%) dans le sens de la largeur, de façon à permettre la récolte et l'écoulement de l'eau par une série de canaux dont le récipient est pourvu. A l'intérieur du récipient on dispose une couche inférieur de gravier qui sert à l'irrigation du terrain, et, par dessus une couche de terre préalablement stérilisée. La serre pourra être pourvue d'un couvercle de plastique semblable à ceux utilisés en horticulture. Dans un cas d'exemple pratique, le récipient en ciment a une longueur de 14 m, une largeur de 6 m et une profondeur de 60 cm. La couche de gravier a une hauteur de 20 cm et la couche de terrain stérile a une hauteur de 30 cm.

Dans le cas où l'on veut utiliser une pépinière stérile, on choisit une portion de terrain dont on délimite le périmètre au moyen de fines parois de caoutchouc ou de matière plastique enterrées de manière à ne pas laisser s'infiltrer l'eau dans la portion de terrain choisie jusqu'à une profondeur de 1,5 m. Cette portion de pépinière est alors stérilisée chimiquement (par exemple avec du bromure de méthyle), puis recouverte d'un tunnel de matière plastique.

La plantation des plants pilotes dans la pépinière stérile ou dans la serre stérile s'effectue en automne. De préférence, on espace les plants d'un demi-mètre.

Le procédé comprend ensuite une série d'opérations nécessaires à la préparation des plantes destinées à être mycorhizées. Le traitement varie légèrement s'il s'agit de plantes adultes, de deux à dix ans d'âge, de boutures ou de plants de pépinière.

Dans le cas où les plantes à mycorhizer ont de deux à dix ans d'âge, celles-ci sont prélevées lorsqu'elles sont déjà en période de repos végétal. Toutes les racines secondaires mycorhizées par d'autres champignons que celui choisi sont coupées mécaniquement. Les racines restantes sont alors stérilisées par exemple avec une solution de chlorure de mercure à un pour mille pendant deux heures. On procède ensuite à la taille de ces racines. Elles sont ensuite traitées aux hormones pour favoriser la croissance. Enfin les plantes sont plantées dans la serre ou dans la pépinière avec les plants pilotes avant la reprise du développement végétal.

Dans le cas où les plantes destinées à être mycorhizées sont des boutures, une fois choisies les plantes adéquates, elles sont stérilisées par exemple avec du chlorure de mercure à un pour mille, et sont ensuite traitées aux hormones pour favoriser la croissance. Enfin les plantes sont plantées avant la reprise du développement végétal.

Dans le cas où les plantes à mycorhizer sont des plants de pépinière forestière, il est nécessaire, pour limiter les frais, de prélever des plants entre six mois et un an d'âge. A ce stade, les plants n'ont encore été mycorhizés par aucun champignon. Ceux-ci sont stérilisés au chlorure de mercure durant une heure et sont ensuite plantés dans la serre ou la pépinière stérile. Cette opération s'effectue avant la reprise du développement végétal.

Dans les trois cas décrits ci-dessus, les plants sont mycorhizées par le champignon symbiotique choisi avant la fin de l'automne. En cette saison ils sont alors prêts à être plantés en plein air.

Grâce au procédé selon la présente invention, il est donc possible de provoquer la mycorhize sur des plantes adultes, et par là de réduire la période d'attente jusqu'à la récolte des fruits. En outre, ce procédé peut être utilisé pour mycorhizer des plantes par n'importe quelle sorte de champignon, ce qui est impossible avec les méthodes connues. Les frais de production d'un plant mycorhizé en sont notablement réduits.

0035296

REVENDICATIONS

1.     Procédé de production de plantes mycorhizées par des champignons symbiotiques, caractérisé par le fait qu'il comprend la chaîne d'opérations suivante :

a) cultiver une série de plants en terrain stérile,

b) mycorhizer les plants qui ont poussé en état stérile, en mettant en contact les racines de ces plants avec des racines déjà mycorhizées par le champignon choisi, prélevées dans la nature sur une autre plante,

c) planter les plants pilotes ainsi obtenus dans un terrain stérile,

d) couper les racines secondaires, mycorhizées par d'autres champignons que celui choisi, des plantes adultes que l'on veut mycorhizer, et stériliser les racines qui restent,

e) planter en terrain stérile à côté des plantes pilotes lesdites plantes adultes pour provoquer leur mycorhize.

2.     Procédé selon la revendication 1, caractérisé par le fait que la culture des plantes en terrain stérile dans la première phase du procédé se fait à partir de semences.

3.     Procédé selon la revendication 1, caractérisé par le fait que les plants pilotes obtenus sont plantés dans une serre stérile.

4.     Procédé selon la revendication 1, caractérisé par le fait que les plants pilotes obtenus sont plantés dans une pépinière stérile.

5.     Procédé selon la revendication 1, caractérisé par le fait que les plants pilotes sont plantés en automne.

./..

0035296

6.    Procédé selon la revendication 1, caractérisé par le fait que les plants pilotes sont plantés espacés d'un demi-mètre.

7.    Procédé selon la revendication 1, caractérisé par le fait que la stérilisation des racines restantes des plantes adultes à mycorhizer est réalisée par une solution de chlorure de mercure à un pour mille.

8.    Procédé selon la revendication 1, caractérisé par le fait que les racines restantes des plantes adultes à mycorhizer, après avoir été stérilisées, sont traitées aux hormones pour favoriser la croissance.

9.    Procédé selon la revendication 8, caractérisé par le fait que les plantes adultes à mycorhizer, une fois traitées aux hormones, sont plantées avant la reprise du développement végétal.

| Catégorie | Citation du document avec indication, en cas de besoin, des parties pertinentes | Revendica-tion concernée |
|---|---|---|
| A | <u>FR - A - 1 408 517</u> (DELVERT)<br>Totalité du brevet *<br><br>---- | 1 |

**DOCUMENTS CONSIDERES COMME PERTINENTS**

**CLASSEMENT DE LA DEMANDE** (Int. Cl.³)

A 01 G 7/00

**DOMAINES TECHNIQUES RECHERCHES** (Int. Cl.³)

A 01 G 7/00
1/04

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 15-06-1981 | HERYGERS |